# EUROPÄISCHE PATENTANMELDUNG

(11) **EP 1 253 417 A2**
(43) Veröffentlichungstag der Anmeldung: **30.10.2002**
(21) Anmeldenummer: 02405308.4
(22) Anmeldetag: 16.04.2002
(51) Int. Cl.: G01N 1/10, G01N 1/20, G01N 1/22

(54) **Probenahmeventil zur Entnahme von flüssigen oder gasförmigen Proben aus Leitungen oder Behältern**

(30) Priorität: 20.04.2001 CH 7242001
(71) Anmelder: René Iff Creatif-Engineering, 4654 Lostorf (CH)
(72) Erfinder: René Iff Creatif-Engineering, 4654 Lostorf (CH)
(74) Vertreter: Kulhavy, Sava, Dipl.-Ing.

(57) **Zusammenfassung**

Die Einrichtung umfasst ein Ventil (10), welches so ausgeführt ist, dass das fluide Medium beim Schliessen des Ventils (10) aus dem Inneren desselben verdrängt werden kann. Die Einrichtung umfasst ferner einen im wesentlichen flachen Sockel (5), wobei das Ventil (10) der einen Seite und eine Hülle (2) in welcher das fluide Medium eingeschlossen ist, der anderen Seite des Einrichtungssockels (5) zugeordnet sind. Eine Einlassöffnung (15) verbindet strömungsmässig die genannten Seiten des Sockels (5). Das Ventil (10) hat einen im wesentlichen steifen Ventilsitz (11) sowie ein Absperrorgan (20) aus einem nachgiebigen Material. Im unbetätigten Zustand liegt das Absperrorgan (20) dichtend auf der Oberfläche des Ventilsitzes (11). Die Einrichtung umfasst schliesslich eine Vorrichtung (40), welche eine Verformung des nachgiebigen Absperrorgans (20) gegenüber dem Ventilsitz (11) ermöglicht.

## Beschreibung

Die Erfindung betrifft eine Einrichtung zur Entnahme von fluiden Medien aus einem Hohlraum, insbesondere aus einer Rohrleitung oder einem Behälter, mit einem Ventil.

Die Entnahme von Proben ist aus verschiedenen Gründen, wie z.B. wegen Qualitätskontrolle, Prozessüberwachung, Umweltschutz usw., immer häufiger erforderlich und das Analysieren von kleinsten Stoffwerten immer wichtiger. Um dies zu gewährleisten muss eine Probe repräsentativ sein, das heisst, dass der erste aus dem Ventil fliessende Tropfen Probeflüssigkeit der tatsächlichen Zusammensetzung des durch die Rohrleitung strömenden Fluids entsprechen muss. Ein zur Probenahme bestimmtes Ventil muss deshalb totraumfrei und ohne Sackleitung sein. Bekannt ist das Probenehmen von gefährlichen, giftigen und oder teuren Stoffen vor allem in Prozessanlagen der chemischen und verwandten Industrien sowie in der Getränkeindustrie.

Die zurzeit auf dem Markt bekannten und vorherrschenden Einrichtungen mit Probenahmeventilen, z.B. gemäss CH-PS Nr. 656 601 und US-Patent Nr. 4,580,452, haben den Nachteil, dass von der Entnahmeöffnung im Ventil eine Stange mit Verschlusskegel durch den Rohrleitungsquerschnitt und die gegenüberliegende Stopfbüchse zum Betätigungsmittel geführt wird. Dadurch wird einerseits der freie Querschnitt für die durchströmende Flüssigkeit beeinträchtigt, und anderseits die Rohrleitung mit zwei Öffnungen versehen was eine zusätzliche Leckage-Gefahr darstellt. Im weiteren beschränkt sich diese Ventilart auf die Anwendungen in Rohrleitungen, und nur bis zu der Grösse bei der für die "Stange" keine Knickgefahr besteht. Anwendungen über der kritischen Grösse werden mit By-Pass Leitungen ausgeführt, was sehr aufwendig und für das Fluid oder den Prozess nachteilig ist.

Es gibt auch andere Einrichtungen mit Probenahmeventilen, die zum Stand der Technik gehören. Das Probenahmeventil besteht aus einem Ventilgehäuse mit einem in der Entnahmeöffnung angebrachten Ventilsitz und einem axial bewegbaren und mit einem Betätigungsmittel verbundenen Schliessorgan. Durch eine schräg zur Ventilachse und tangential zum Ventilsitz angeordnete Auslassöffnung gelangt die Probeflüssigkeit nach aussen. Diese Ventilart kann an Rohrleitungen wie auch an Behältern eingesetzt werden, sie weist keine durchquerende Stange auf, erfüllt aber die Bedingung der Totraumfreiheit in keiner Weise. Um mit diesem Probenahmeventil eine repräsentative Flüssigkeitsprobe zu ziehen, muss die im Ventil bleibende Restmenge durch eine zweite im Ventilgehäuse angebrachte Öffnung mit Reinigungsmittel oder Dampf gespült werden. Dieser Spülprozess verkompliziert und verteuert die Probenahme erheblich. US-PS Nr. 5246204 und DE-PS Nr. 9546354 offenbaren diese Art von Probenahmeventil.

Die Aufgabe der vorliegenden Erfindung ist, eine Einrichtung der genannten Gattung anzugeben, welche die genannten sowie noch weitere Nachteile nicht aufweist.

Diese Aufgabe wird bei der Einrichtung der eingangs genannten Gattung, so gelöst, wie dies im kennzeichnenden Teil des Patentanspruchs 1 definiert ist.

Das Ventil der vorliegenden Einrichtung weist unter anderem einen totraumfreien Abschluss auf und es eignet sich zur Anordnung an Rohrleitungen beliebiger Grösse wie auch an Behältern beliebigen Inhalts. Wenn es sich um Behälter handelt, dann können diese beispielsweise Lagertanks, Vorratsbehälter, Reaktionskessel usw. sein. Die vorliegende Einrichtung kann auch als ein sogenanntes Anti-g-Ventil in der Raumfahrt verwendet werden, und zwar beispielsweise an Astronautenanzügen.

Nachstehend werden Ausführungsformen der vorliegenden Erfindung anhand der beiliegenden Zeichnungen näher erläutert. Es zeigt:
Fig. 1 perspektivisch die vorliegende Einrichtung, welche mit einem Rohr gekuppelt ist,
Fig. 2 in einem vertikalen Schnitt eine erste Ausführung der vorliegenden Einrichtung in geschlossenem Zustand,
Fig. 3 die Einrichtung aus Fig. 2 in geöffnetem Zustand,
Fig. 4 in einem vertikalen Schnitt eine zweite Ausführung der vorliegenden Einrichtung in geschlossenem Zustand,
Fig. 5 vergrössert die Einrichtung aus Fig. 4 und
Fig. 6 die Einrichtung aus Fig. 5 in geöffnetem Zustand.

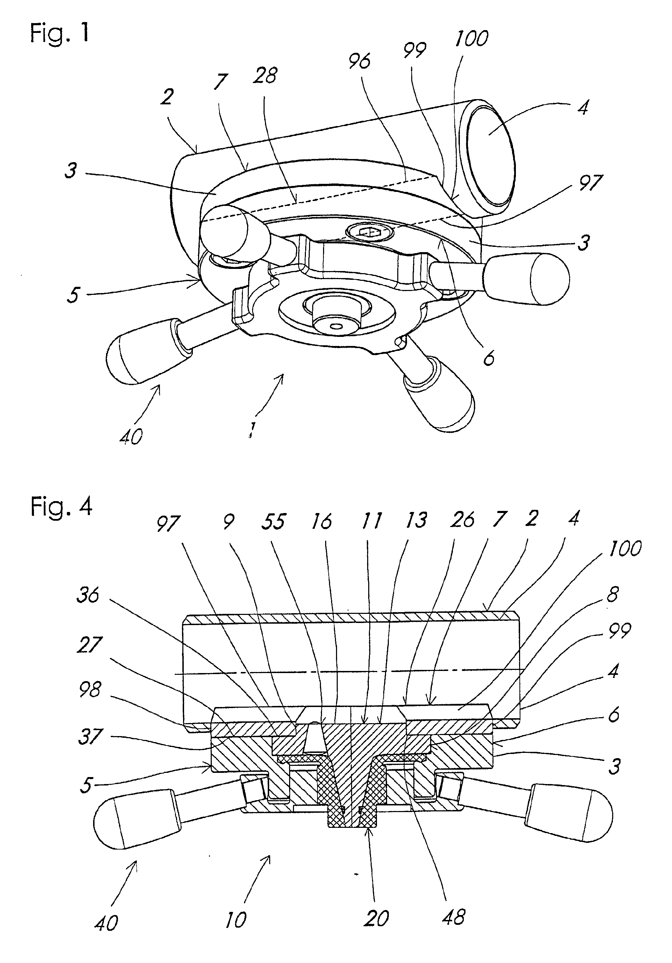

Die in Fig. 1 dargestellte Einrichtung 1 ist an eine Rohrleitung 2 mit einer Innenwand 4 angeschlossen, durch deren Hohlraum ein fluides Medium geführt werden kann. Von diesem Medium können Proben mit Hilfe der vorliegenden Einrichtung 1 genommen werden. Von der Rohrleitung 2 ist in Fig. 1 nur ein Abschnitt dargestellt.

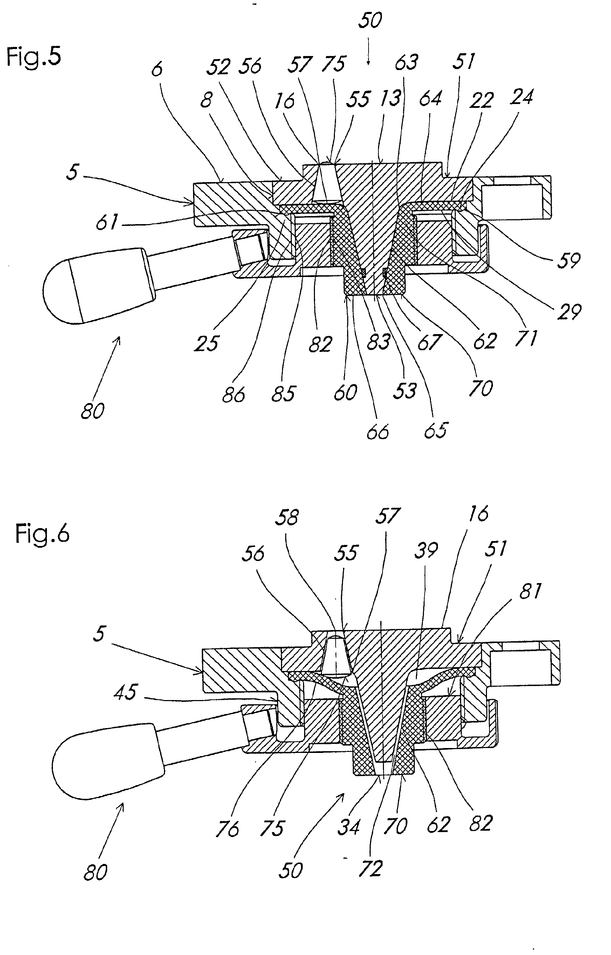

Die vorliegende Einrichtung 1 (Fig. 1) weist einen Sockel 5 auf, welcher im wesentlichen flach ist. Dieser Sockel 5 hat einen Grundkörper bzw. Unterteil 6 sowie einen Oberteil 7. Sowohl der Sockelunterteil 6 als auch der Sockeloberteil 7 haben eine kreisförmige Umfangsfläche 3. Die Unterseite 27 (Fig. 4) des Sockeloberteiles 7 ist im wesentlichen plan. Die Oberseite 37 des Sockelgrundkörpers 6 ist ebenfalls im wesentlichen plan. Der Oberteil 7 des Sockels 5 liegt über seine plane Unterseite 27 auf der planen Oberseite 37 des Sockelunterteiles 6 auf.

In der dieser Einrichtung zugewandten Partie des Rohres 2 ist eine Oeffnung bzw. ein Ausschnitt 28 ausgeführt, wobei der entfernte Teil der Wand des Rohres 2 einen Abschnitt des Mantels eines Zylinders darstellt. Die in dieser Weise entstandene Oeffnung 28 in der Wand des Rohres 2 ist begrenzt durch zwei geradlinig verlaufende Kanten 96 und 97, welche sich parallel zur Längsachse des Rohres 2 erstrecken, sowie durch zwei bogenförmige Kanten 98 und 99, von welchen je eine die sich einander zugeordneten Enden der geradlinigen Kanten 96 und 97 miteinander verbindet. Die geradlinig verlaufenden Oeffnungskanten 96 und 97 liegen auf der Oberseite 35 des Sockeloberteiles 7 auf. Je eine der gekrümmten Oeffnungskanten 98 bzw. 99 ist der kreisförmig verlaufenden Umfangsfläche 3 an zwei einander diametral entgegengesetzt liegenden Stellen des Sockeloberteiles 7 zugeordnet. Die Oeffnungskanten 96 bis 99 sind mit dem Sockeloberteil 7 fluiddicht verbunden.

Damit jener Abschnitt des Sockeloberteiles 7 der Strömung des Fluids im Rohr 2 nicht im Wege steht, welcher sich nach dem Aufsetzen des Rohres 2 auf den Sockeloberteile 7 im Inneren der Rohröffnung 28 befinden würde, ist dieser Abschnitt des Sockeloberteiles 7 entfernt worden. Dadurch entstand in der Oberseite 26 des Sockeloberteiles 7 eine längliche Mulde bzw. eine Eindellung 100, deren Oberfläche die Form eines Ausschnittes aus dem Mantel eines Zylinders hat. Der Querschnitt dieser Mulde 100 hat die Form eines Abschnittes eines Kreisbogens, wobei der Durchmesser des betreffenden Kreises dem Durchmesser der Innenfläche 4 des Rohres 2 gleicht. Diese sich in das Innere 4 des Rohres 2 öffnende Mulde 100 erstreckt sich im Sockeloberteil 7 so, dass sich das in der Mitte des Sockelgrundkörpers 6 liegende Ventil 10 unterhalb dieser Mulde 100 befindet. Die geradlinig verlaufenden Kanten der teilweise zylindrischen Mulde 100 fallen mit den geradlinig verlaufenden Kanten 96 und 97 der Rohröffnung 28 zusammen. Die gekrümmt verlaufenden Kanten der teilweise zylindrischen Mulde 100 fallen mit den gekrümmt verlaufenden Kanten 98 und 99 der Rohröffnung 28 zusammen.

Im Sockelunterteil 6 ist eine durchgehende Aufnahmeöffnung 8 ausgeführt, welche sich praktisch in der Mitte des Sockelunterteiles 6 befindet und welche eine kreisförmig verlaufende Innenwand aufweist. In dieser Oeffnung 8 ist ein Ventil 10 eingesetzt. Die Innenwand der Aufnahmeöffnung 8 ist in einer an sich bekannten Weise so gegliedert ausgeführt, dass das Ventil 10 durch die Aufnahmeöffnung 8 nicht durchfallen kann.

Das Ventil 10 ist ein gesteuertes Ventil und dieses ist so ausgeführt, dass das fluide Medium beim Schliessen des Ventils 10 aus dem Inneren desselben verdrängt werden kann.

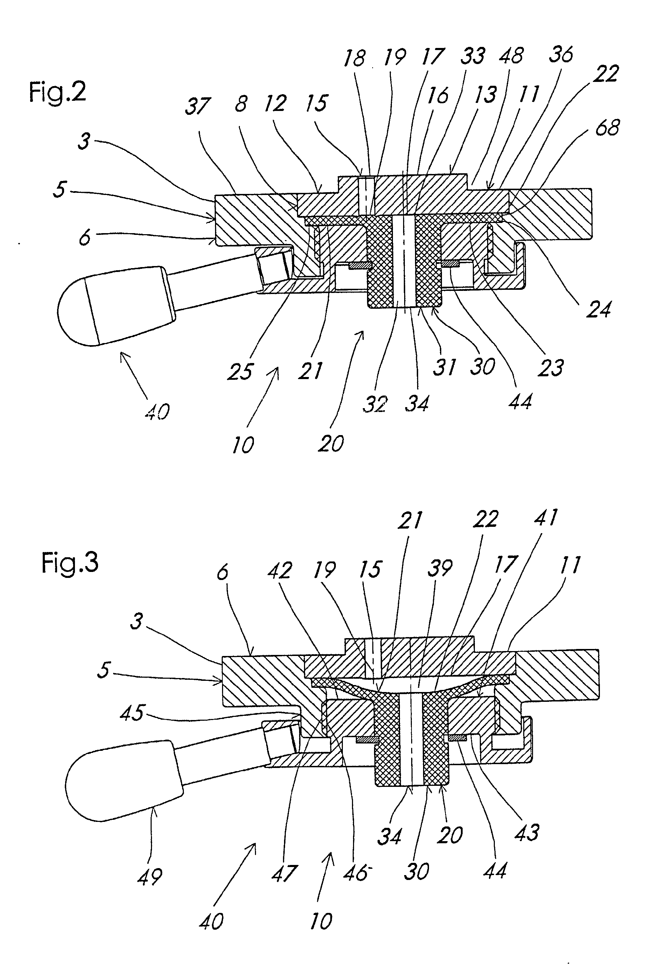

Fig. 2 und 3 zeigen in einem vertikalen Schnitt eine erste der Ausführungsformen der vorliegenden Erfindung. Das Ventil 10 hat einen im wesentlichen steifen Ventilsitz 11, dessen Grundkörper 12 im dargestellten Beispiel die Form einer Scheibe mit einem kreisförmigen Umfang hat. In der Wand der Aufnahmeöffnung 8 im Sockelunterteil 6 ist ein erster erweiterter Abschnitt 38 dieser Oeffnung 8 ausgeführt, in welchem der äussere Rand des scheibenförmigen Grundkörpers 12 des Ventilsitzes eingesetzt ist.

In der Randpartie der Oberseite 36 des Ventilsitzgrundkörpers 12 ist ein Absatz 48 ausgeführt, sodass die Oberseite 36 des Ventilsitzgrundkörpers 12 in ihrer Mitte einen scheibenähnlichen Vorsprung 13 aufweist. Der erweiterte Abschnitt 38 der Aufnahmeöffnung 8 ist gerade nur. so tief, dass die Oberseite bzw. die horizontale Oberfläche 36 der abgesetzten Randpartie 48 der Oberseite 36 des Ventilgrundkörpers 12 mit der oberen Oberfläche 37 des Grundkörpers 6 des Sockels 5 bündig ist.

Praktisch in der Mitte des Sockeloberteiles 7 ist eine Oeffnung 9 (Fig. 4) ausgeführt, deren Durchmesser kleiner ist als der Durchmesser des Ventilgrundkörpers 12 und deren Durchmesser dem Durchmesser des Vorsprungs 13 am Ventilsitz 11 entspricht. Der Sockeloberteil 7 ist auf dem Sockelunterteil 6 so angeordnet, dass der Vorsprung 13 in der Oeffnung 9 des Sockeloberteiles 7 liegt. Dieser Vorsprung 13 ist in der Oeffnung 9 des Sockeloberteiles 7 fluiddicht eingesetzt. Die horizontale Oberfläche 36 des Absatzes 48 am Ventilsitz 11 liegt unter der Randpartie der Oeffnung 9 im Sockeloberteil 7. Dadurch ist das Ventil 10 in der Aufnahmeöffnung 8 des Sockelunterteiles 6 festgehalten. In dieser Weise ist das Ventil 10 einer der Seiten des Oberteiles 7 des Sockels 5 zugeordnet, während die Hülle 2 des Hohlraumes der anderen Seite des Sockeloberteiles 7 zugeordnet ist.

Die Höhe des kreisförmigen Vorsprunges 13 am Ventilsitz 11 ist kleiner als die Dicke des Sockeloberteiles 7 in diesem Bereich des Sockeloberteiles 7. Deswegen befindet sich die oben bzw. aussen liegende Grossfläche16 des Vorsprunges 13 unterhalb dem sich hier befindlichen Bereich der Oberfläche 35 des Sockeloberteiles 7.

Eine Einlass- bzw. Entnahmeöffnung 15 ist im flächenhaften Ventilsitz 11 ausgeführt, welche sich zwischen den einander gegenüberliegenden Grossflächen 16 und 17 des Ventilsitzes 11 bzw. seines Grundkörpers 12 erstreckt. Es versteht sich, dass die vorliegende Einrichtung auch mehrere solche Entnahmeöffnungen 15 aufweisen kann. Im in Fig. 2 und 3 dargestellten Fall, hat die Innenwand der Entnahmeöffnung 15 die Form des Mantels eines Zylinders. Die Entnahmeöffnung 15 ist im Grundkörper 12 des Ventilsitzes 11 aussermittig angeordnet und sie befindet dabei im Bereich des genannten scheibenähnlichen oberen Vorsprungs 13 am Ventilsitz 11. Eine der Mündungen 18 der Entnahmeöffnung 15 liegt in der oberen bzw. äusseren Grossfläche 16 des scheibenähnlichen Vorsprunges 13. Die andere Mündung 19 des Entnahmekanals 15 liegt in der inneren bzw. unteren Grossfläche 17 des Ventilkörpers 11.

Wenn man sich die Bildung eines verhältnismässig grossen Loches 28 in der Wand des Rohres 2 ersparen will, dann kann man in der Wand des Rohres 2 bloss eine Bohrung (nicht dargestellt) machen, welche einen verhältnismässig kleinen Durchmesser hat. Die wie beschrieben gedellte Grossfläche 16 des scheibenähnlichen Vorsprunges 13 ist der Aussenfläche des Rohres 2 fluiddicht zugeordnet, und zwar derart, dass das Loch 28 im Rohr 2 mit der Entnahmeöffnung 15 im Ventilsitz 11 übereinstimmt. So kann das fluide Medium durch diese Öffnungen 28 und 15 aus dem Inneren des Rohres 2 in das Innere des Ventils 10 gelangen.

Das Ventil 10 umfasst ferner ein Absperrorgan 20, welches aus einem nachgiebigen Material ist und welches mit dem Ventilsitz 11 zusammenarbeiten kann. Das Absperrorgan 20 weist einen flächenhaften Abschnitt 21 auf, welcher die Form einer Scheibe mit einer kreisförmigen Umfangsfläche hat. Dieser flächenhafte Abschnitt 21 des Absperrorgans 20 hat einen Durchmesser, welcher mit dem Durchmesser des Ventilsitzes 11 vergleichbar ist. Im dargestellten Fall ist der Durchmesser des flächenhaften Abschnittes 21 des Absperrorgans 20 kleiner als der Durchmesser des Ventilsitzes 11.

In der Wand der Aufnahmeöffnung 8 im Sockelunterteil 6 ist ein zweiter Absatz bzw. erweiterter Abschnitt 25 der Aufnahmeöffnung 8 ausgeführt, welcher unterhalb des ersten erweiterten Abschnittes 38 dieser Oeffnung 8 liegt und welcher einen kleineren Durchmesser hat als der erste erweiterte Oeffnungsabschnitt 38. Die äussere Randpartie 24 des flächenhaften Abschnittes 21 des Absperrorgans 20 liegt in diesem zweiten erweiterten Oeffnungsabschnitt 25 und sie ist zwischen der Randpartie des darauf liegenden Grundkörpers 12 des Ventilsitzes 11 und dem Boden des zweiten Absatzes 25 in der Aufnahmeöffnung 8 des Sockels 5 gehalten, beispielsweise durch Klemmung der genannten Randpartie 24.

Der flächenhafte Abschnitt 21 des Absperrorgans 20 ist der innenliegenden Grossfläche 17 des flächenhaften Ventilsitzes 11 zugeordnet, wobei die Zentralachsen dieser Scheiben 12 und 21 zusammenfallen. Die Oberfläche 22 des flächenhaften Abschnittes 21 des Absperrorgans 20 liegt auf der Unterseite 17 des Ventilkörpers 11 satt bzw. dichtend auf, wenn sich die Einrichtung in unbetätigter Stellung befindet (Fig. 2). Hierbei liegt die Oberfläche 22 des flächenhaften Abschnittes 21 des Absperrorgans 20 jedoch auch auf der innenliegenden Mündung 19 der Entnahmeöffnung 15 im Ventilsitz 11, sodass der flächenhafte Abschnitt 21 des Absperrorgans 20 auch diese Entnahmeöffnung 15 dichtend abschliessen kann.

Das Absperrorgan 20 weist ferner einen länglichen Fortsatz 30 auf, welcher von jener Grossfläche 29 des flächenhaften Abschnittes 21 des Absperrorgans 20 absteht, welche vom Ventilsitz 11 abgewandt ist. Der Grundkörper 31 des Fortsatzes 30 hat im wesentlichen die Form eines Zylinders, welcher über eine seiner Grundflächen an die Aussenfläche 29 des flächenhaften Abschnittes 21 des Absperrorgans 20 angeschlossen ist. Dieser Fortsatz 30 ist mit dem Flächenabschnitt 21 des Absperrorgans 20 zweckmässigerweise einstückig. In diesem Fortsatz 30 ist ein Kanal 32 ausgeführt, welcher sich im Achsialbereich des Zylinders 31 befindet und sich im Flächenabschnitt 21 des Absperrorgans 20 fortsetzt. Es versteht sich, dass die vorliegende Einrichtung auch mehrere Kanäle 32 aufweisen kann. Der Kanal 32 weist eine zylinderförmige Wand auf.

Die erste bzw. obere Mündung 33 dieses Kanals 32 liegt in jener Grossfläche 22 des flächenhaften Abschnittes 21 des Absperrorgans 20, welche dem Ventilsitz 11 zugewandt ist. Die zweite Mündung 34 des Kanals 32 liegt in der freien Stirnfläche des Fortsatzes 30. Da die Einlassöffnung 15 aussermittig angeordnet ist und da der Fortsatzkanal 32 im Gegenteil im Achsialbereich A des Ventils 10 liegt, liegt die innenliegende Mündung 33 des Fortsatzkanals 32 neben der im Ventilsitz 11 ausgeführten Entnahmeöffnung 15.

Die vorliegende Einrichtung umfasst ferner eine Betätigungsvorrichtung 40, welche am Sockel 5 der Einrichtung angebracht ist und welche dem Fortsatz 30 des Ventils 10 zugeordnet ist. Die Betätigungsvorrichtung 40 ist der Aussenseite des Fortsatzes 30 zugeordnet bzw. sie kann auf die Aussenseite des Fortsatzes 30 einwirken. Die Betätigungsvorrichtung 40 ist unter anderem so ausgeführt, dass sie den Fortsatz 30 des Absperrorganes 20 sowie die sich an diesen Fortsatz 30 anschliessenden Partien des flächenhaften Abschnittes 21 des Absperrorganes 20 von der unteren Oberfläche 17 des Ventilsitzes 11 weg bewegen kann. Dabei wird der flächenhafte Abschnitt 21 des Absperrorgans 20, welcher, wie dargelegt, aus einem nachgiebigen Material ist, durch die Betätigungsvorrichtung 40 gegenüber dem Ventilsitz 11 so verformt, dass die untere Mündung 19 der Einlassöffnung 15 frei gegeben wird. Das Fluid kann dann durch die Einlassöffnung 15 in einen im Inneren des Ventils 10 in dieser Weise gebildeten Hohlraum 39 gelangen bzw. einströmen.

Die Betätigungsvorrichtung 40 weist einen flachen ringförmigen Grundkörper 41 auf, welcher am Sockel 5 der vorliegenden Einrichtung angebracht ist. Der ringförmige Grundkörper 41 der Betätigungsvorrichtung 40 umgibt den Fortsatz 30 des Absperrorganes 20, wobei der Durchmesser der Oeffnung im Betätigungsring 41 zumindest so gross ist wie der äussere Durchmesser des Fortsatzes 30. Die Höhe HR des Ringes 41 ist kleiner als die Höhe HF des Fortsatzes 30. Der Ring 41 ist am Fortsatz 30 so hoch angeordnet, dass seine obere Grossfläche 42 die untere Grossfläche 23 des Flächenabschnittes 21 des Absperrorgans 20 berührt.

Die Aussenseite des Fortsatzes 30 ist mit einer Mitnehmerscheibe 44 versehen, welche die Aussenwand des Fortsatzes 30 umgibt und deren äussere Randpartie vom Fortsatz 30 absteht. Die Mitnehmerscheibe 44 befindet sich unterhalb der Unterseite 43 des Ringes 41. Der äussere Durchmesser der Mitnehmerscheibe 44 ist grösser als der innere Durchmesser des Betätigungsringes 41, sodass die äussere Randpartie der Mitnehmerscheibe 44 an der Unterseite 43 des Betätigungsringes 41 anschlägt. Wenn man den Betätigungsring 41 abwärts bewegt, dann wird die Mitnehmerscheibe 44 wegen dem Eingriff mit der Unterseite 43 des Betätigungsringes 41 und somit auch der Fortsatz 30 ebenfalls nach unten gezogen. Dies führt zu der in Fig. 3 dargestellten Verformung des Flachabschnittes 21 des Absperrorganes 20, zur Freigabe der innenliegenden Mündung 19 der Einlassöffnung 15 und zur Bildung eines Hohlraumes 39 im Ventil 10, über welchen die Einlassöffnung 15 mit dem Fortsatzkanal 32 fluidmässig verbunden wird.

Um die ab und auf gehende Bewegung des Betätigungsringes 41 zu erreichen, ist die Unterseite des Grundkörpers 6 des Einrichtungssockels 5 ist mit einem verhältnismässig niedrigen ringförmigen Vorsprung 45 versehen, welcher sich unterhalb des Ventilsitzes 11 befindet. Der Innendurchmesser dieses Ringvorsprunges 45 entspricht dem Aussendurchmesser des Betätigungsringes 41. Die Innenwand des Ringvorsprunges 45 ist mit einem Gewinde 47 versehen. Die äussere zylinderförmige Umfangswand des Betätigungsringes 41 ist ebenfalls mit einem Gewinde 46 versehen, welches mit dem Gewinde 46 am Betätigungsring 41 zusammenarbeiten kann.

Der Betätigungsring 41 ist mit zumindest einem Griff 49 einer an sich bekannten Ausführung versehen, welcher vom Betätigungsring 41 absteht. Der Betätigungsring 41 zusammen mit den Griffen 49 können auch als Handrad bezeichnet werden. Mit Hilfe dieses Handrades kann der im Ringvorsprung 45 am Sockel 5 eingeschraubte Betätigungsring 41 gedreht werden. Hierbei fährt der Betätigungsring 41 in den Ringvorsprung 45 hinein oder aus dem Ringvorsprung 45 heraus. Wegen dem genannten Anschluss des Fortsatzes 30 des Absperrorgans 20 an den Betätigungsring 41 wird das Absperrorgan 20 in der dargelegten Weise verformt. Dies hat unter anderem die Bildung des genannten Hohlraumes 39 im Ventil 10 zur Folge.

In Fig. 4 bis 6 ist eine weitere Ausführungsform der vorliegenden Einrichtung dargestellt. Diese Ausführungsform der vorliegenden Einrichtung unterscheidet sich von den vorgehenden Ausführungsformen vor allem in der Ausbildung des Ventils 50. Der Sitz 51 des vorliegenden Ventils 50 umfasst einen ersten Abschnitt 52, welcher im wesentlichen so ausgebildet ist, wie der Sitz 11 des Ventils 10 gemäss Fig. 2 bzw. 3.

Der Sitz 51 des vorliegenden Ventils 50 umfasst ferner einen zweiten Abschnitt 53, welcher als eine konusförmige Erhebung ausgeführt ist. Diese steht von jener Grossfläche 23 des ersten, scheibenähnlichen Abschnittes 52 des Ventilsitzes 51 ab, welche der Betätigungsvorrichtung 40 zugewandt ist. Die den grösseren Durchmesser aufweisende Grundfläche des Konusses 53 ist mit dem scheibenähnlichen Abschnitt 52 des Ventilsitzes 51 verbunden bzw. einstückig. Die Erhebung 53 befindet sich im vorliegenden Ventil 50 zentral und sie liegt somit neben der Einlassöffnung 55, welche ebenfalls im scheibenähnlichen Abschnitt 52 des Ventilsitzes 51 in der bereits beschriebenen Weise ausgeführt ist.

Das Ventil 10 umfasst ferner ein Absperrorgan 60, welches ebenfalls aus einem nachgiebigen Material ist und welches mit dem Ventilsitz 51 zusammenarbeiten kann. Das Absperrorgan 60 weist einen flächenhaften Abschnitt 61 auf, welcher die Form einer Scheibe mit einer kreisförmigen Umfangsfläche hat. Die Randpartie 24 des flächenhaften Abschnittes 61, welche sich im Bereich des Bodens des zweiten Absatzes 25 in der Aufnahmeöffnung 8 befindet, ist mit einer ringförmigen Verdickung 59 versehen. Im dargestellten Fall steht diese Verdickung 59 von der Unterseite 29 des flächenhaften Abschnittes 61 ab und der Querschnitt dieser Verdickung 59 ist im dargestellten Fall halbkreisförmig. Diese Verdickung 59 soll zu einem festeren Halt der Randpartie 24 des flächenhaften Abschnittes 61 zwischen dem Grundkörper des Ventilsitzes 51 und dem Boden des zweiten Absatzes 25 beitragen. Es versteht sich, dass eine solche oder ähnlich ausgebildete Verdickung 59 auf bzw. auch auf der oberen Grossfläche 64 des scheibenförmigen Abschnittes 61 ausgeführt sein kann. Ansonsten ähnelt dieser Flächenabschnitt 61 dem Flächenabschnitt gemäss Fig. 2 bzw. 3.

Das Absperrorgan 60 weist ferner einen länglichen Fortsatz 70 auf, welcher von jener Grossfläche 29 des flächenhaften Abschnittes 61 des Absperrorgans 60 absteht, welche vom Ventilsitz 51 abgewandt ist. Der Grundkörper 71 des Fortsatzes 70 hat im wesentlichen die Form eines Zylinders, welcher über eine seiner Grundflächen an die Aussenfläche 29 des flächenhaften Abschnittes 61 des Absperrorgans 60 angeschlossen ist. Dieser Fortsatz 70 ist mit dem Flächenabschnitt 61 des Absperrorgans 60 zweckmässigerweise einstückig.

Im Fortsatz 70 ist ein Kanal 62 ausgeführt, welcher sich im Achsialbereich des Zylinders 71 befindet und sich im Flächenabschnitt 61 des Absperrorgans 60 fortsetzt. Die Wand des Kanals 62 hat die Form des Mantels eines Konusses. Die Abmessungen dieses konusförmigen Fortsatzkanals 62 sind derart gewählt, dass die konusförmige Erhebung 53 des Ventilsitzes 51 in den Fortsatzkanal 62 mit dem konusförmigen Verlauf dichtend passen kann. Zur Verbesserung dieser Dichtungsfähigkeit kann die verjüngte Partie der Erhebung 53 mit einer zusätzlichen Ringdichtung 67 versehen sein. Die den grösseren Durchmesser aufweisende Mündung 63 des Fortsatzkanals 62 liegt in jener Grossfläche 64 des flachen Abschnittes 61 des Absperrorgans 60, welche dem Ventilsitz 51 zugewandt ist. Die den kleineren Durchmesser aufweisende Mündung 65 des Fortsatzkanals 62 liegt in der freien Stirnfläche 66 des Fortsatzes 70.

Die Betätigungsvorrichtung 80 ist der Aussenseite des Fortsatzes 70 zugeordnet. Die Betätigungsvorrichtung 80 weist einen flachen ringförmigen Grundkörper 81 auf, welcher am Sockel 5 der vorliegenden Einrichtung angebracht ist. Der ringförmige Grundkörper 81 der Betätigungsvorrichtung 80 umgibt den Fortsatz 70 des Absperrorganes 60, wobei der Durchmesser der Oeffnung im Betätigungsring 81 zumindest so gross ist wie der äussere Durchmesser des Fortsatzes 70. Die Unterseite des Grundkörpers 6 des Einrichtungssockels 5 ist mit einem verhältnismässig niedrigen ringförmigen Vorsprung 45 versehen, welcher den Ventilsitz 51 umgibt. Der Innendurchmesser dieses Ringvorsprunges 45 entspricht dem Aussendurchmesser des Betätigungsringes 81.

Eine zylinderförmige Hülse 82 ist an der Aussenfläche des Fortsatzes 70 befestigt und in der Aussenseite dieser Hülse 82 ist ein linksgängiges Innengewinde 83 ausgeführt. In der Innenwand des Betätigungsringes 81 ist ein weiteres linksgängiges Gewinde 84 ausgeführt, welches mit dem Gewinde 83 am Fortsatz 70 zusammenarbeiten kann. Die äussere zylinderförmige Umfangswand des Betätigungsringes 81 ist mit einem rechtsgängigen Aussengewinde 85 versehen. Die Innenwand des Ringvorsprunges 45 am Sockel 5 ist mit einem rechtsgängigen Innengewinde 86 versehen. Durch Drehen des Handrades im Gegenuhrzeigersinn bewegt sich das Absperrorgan 60 vom Ventilsitz 51 weg und dies gibt einen Ringspalt 72 frei für den Durchfluss des Mediums durch das Ventil 50. Diese Handradausführung mit Links- und Rechtsgewinde ermöglicht die wünschenswerte Feinregulierung der Verformung des nachgiebigen Absperrorgans 60 und somit auch die wünschenswerte Feinregulierung des Fluidstromes durch die vorliegende Einrichtung.

Bei der in Fig. 4 bis 6 abgebildeten Einrichtung hat die Wand 56 der Einlassöffnung 55 im Ventilsitz 51 die Form des Mantels eines Konusses. Die den grösseren Durchmesser aufweisende Mündung 57 dieser Einlassöffnung 55 liegt im Inneren 39 des Ventils 50. Die den kleineren Durchmesser aufweisende Mündung 58 dieser Einlassöffnung 55 liegt in der oberen bzw. äusseren Grossfläche 16 des Sitzes 51 des Ventils 50.

Ein Hilfsdichtkörper 75 ist in der Einlassöffnung 55 angeordnet. Die Aussenwand dieses Dichtkörpers 75 hat die Form des Mantels eines Konusses, wobei die Abmessungen und die Orientierung dieses Konusses 75 so gewählt sind, dass er in die Einlassöffnung 55 dichtend passt. Die dem Inneren des Ventils 50 zugewandte, breitere Endpartie 76 des Hilfsdichtkörpers 75 liegt auf dem planen Abschnitt 61 des Absperrorgans 61 auf. Der Dichtkörper 75 ist so lang ausgeführt, dass seine gegenüberliegende, engere Endpartie 77 aus der Einlassöffnung 55 sogar etwas ragt, wenn sich das Ventil 50 in seiner unbetätigten Stellung befindet, oder mit der oberen bzw. kleineren Mündung 58 dieser Oeffnung 55 mindestens bündig ist.

Wenn das Absperrorgan 60 sich in seiner unbetätigten Stellung befindet, dann drückt der plane Abschnitt 61 des Absperrorgans 61 den Hilfsdichtkörper 75 in die Einlassöffnung 55 hinein. Dadurch wird das Medium, welches während dem Betrieb des Ventils 50 durch die Einlassöffnung 55 strömte, beim Schliessen des Ventils 50 aus der Einlassöffnung 55 in den Hohlraum 2 zurück verdrängt.

Beim Öffnen des Ventils wird das Hilfsschliessorgan 75 durch den Druck des sich im Hohlraum 2 befindlichen Fluids heruntergedrückt, wodurch ein Ringspalt zwischen der Wand der Einlassöffnung und der Wand des Hilfsdichtkörpers 75 entsteht, durch welchen das Fluid durch die Einlassöffnung und das Innere des Ventils fliessen kann.

Das Drehen des Handrades im Uhrzeigersinn bewirkt, dass das Absperrorgan den Ringspalt 72 schliesst und dass der flächenhafte Abschnitt 61 des Absperrorganes 60 sich gegen den Ventilsitz 51 hin bewegt. Am Schluss drückt der flächenhafte Abschnitt 61 des Absperrorganes 60 das Hilfsschliessorgan 75 in das Innere der Einlassöffnung 55.

Beim Schliessen des Ventils 10 bzw. 50 wird das Medium aus den Innenräumen 39 des Ventils verdrängt. Dies deswegen, weil die vorliegende Einrichtung so ausgeführt ist, dass es keine hohlen Räume mehr im Inneren des Ventils gibt, nachdem das Ventil geschlossen worden ist. Folglich ist das Ventil in geschlossenem Zustand von der äusseren Mündung 58 der Einlassöffnung 55 bis zur Austrittsöffnung 34 totraumfrei verschlossen.

Es versteht sich, dass auch die einzelnen Bestandteile der vorstehend beschriebenen Ausführungsformen der vorliegenden Einrichtung miteinander kombiniert werden können. So ist es beispielsweise möglich, dass das Hilfsventil 75 aus der Ausführung gemäss Fig. 4 bis 6 mit dem Hauptventil 10 aus Fig. 2 und 3 kombiniert werden kann. Oder die Einlassöffnung 15 aus der Ausführung gemäss Fig. 2 und 3 kann mit dem Hauptventil 50 aus Fig. 4 bis 6 kombiniert werden kann, usw. Dies trifft auch für weitere Bestandteile der vorliegenden Einrichtung zu.

Die Erfindung ist in keiner Weise auf die vorangehende, nur als Beispiel beschriebene Ausbildung beschränkt. Es ist auch ein Absperrorgan mit einer dynamischen Dichtung denkbar, ohne den Rahmen der Erfindung zu verlassen. Auch die Betätigungsmittel sind in vielfältiger Art dem Fachmann bestens bekannt. So sind die Form und Ausführung des Handrades in anderen äquivalenten Varianten denkbar. Eine oft vorgezogene Ausführung beinhaltet eine federschliessende Belastung des Absperrorganes und einen sog. "Totmannhebel," der die Federkraft überwindet, um das Ventil zu öffne. Beim Loslassen des Hebels schliesst die Federkraft das Ventil wieder. Die öffnende Funktion kann auch pneumatisch oder hydraulisch ausgeführt werden.

Die Werkstoffe der drei produktberührten Teile, d.h. des Ventilsitzes, des Absperrorgans und des Hilfsschliessorgans des Probenahmeventiles sind den Werkstoffen der Rohrleitung oder des Behälters anzupassen. Der Ventilsitz wird vorzugsweise in Edelstahl oder Keramik gefertigt und das Absperrorgan kann aus Edelstahl oder aus Fluorkunststoff wie z.B. PTFE sein. Das Hilfsschliessorgan wird vorzugsweise in einem elastischen Werkstoff wie z.B. Viton oder Perfluorelastomer gefertigt. Werkstoffe, Befestigungsart sowie Dichtungsart sind in keiner Weise auf diese Beschreibung beschränkt. Es stehen dem Fachmann verschiedene bekannte Alternativen zur Verfügung. Das Absperrorgan 20 bzw.60 kann aus einem Metall, beispielsweise aus Stahl sein. Der flächenhafte Abschnitt 21 eines solchen Absperrorganes 20 bzw.60 ist in einem solchen Fall als eine Membran aus demselben Metall ausgeführt, welche mit dem Fortsatz 30 dieses Absperrorganes 20 bzw.60 zweckmässigerweise einstückig ist.

## Patentansprüche

1. Einrichtung zur Entnahme von fluiden Medien aus einem Hohlraum, insbesondere aus einer Rohrleitung (2) oder einem Behälter, mit einem Ventil, **dadurch gekennzeichnet, dass** das Ventil (10,50) so ausgeführt ist, dass das fluide Medium beim Schliessen des Ventils (10,50) aus dem Inneren des Ventils (10,50) verdrängt werden kann.

2. Einrichtung nach Patentanspruch 1, **dadurch gekennzeichnet, dass** sie einen im wesentlichen flachen Sockel (5) aufweist und dass das Ventil (10,50) der einen Seite und die Hülle (2) des Hohlraumes der anderen Seite des Einrichtungssockels (5) zugeordnet sind.

3. Einrichtung nach Patentanspruch 2, **dadurch gekennzeichnet, dass** das Ventil (10,50) ein gesteuertes Ventil ist, dass dieses Ventil (10,50) einen im wesentlichen steifen Ventilsitz (11,51) aufweist, dass dieser Ventilsitz dem Einrichtungssockel (5) zugeordnet ist, dass das Ventil (10,50) ferner ein Absperrorgan (20,60) aus einem nachgiebigen Material aufweist, welches mit dem Ventilsitz zusammenarbeiten kann und dass das Ventil (10,50) schliesslich eine Vorrichtung (40,80) aufweist, welche eine Verformung des nachgiebigen Absperrorgans gegenüber dem Ventilsitz ermöglicht.

4. Einrichtung nach Patentanspruch 3, **dadurch gekennzeichnet, dass** der Ventilsitz (11,51) zumindest einen Abschnitt (12) aufweist, welcher im wesentlichen plan zw. flächenhaft ist, dass eine durchgehende Einlass- bzw. Entnahmeöffnug (15,55) im flächenhaften Abschnitt des Ventilsitzes ausgeführt ist, dass diese Einlassöffnung sich zwischen den einander gegenüberliegenden Grossflächen des Ventilsitzes erstreckt, dass das Absperrorgan (20,60), welches aus einem nachgiebigen Material ist, ebenfalls einen flächenhaften Abschnitt (21,61) aufweist und dass dieser flächenhafte Abschnitt des Absperrorgans einer der Grossflächen des flächenhaften Abschnittes (12,52) des Ventilsitzes zugeordnet ist, und zwar derart, dass der flächenhafte Abschnitt des Absperrorgans auf der in dieser Grossfläche liegenden Mündung der Entnahmeöffnung dichtend aufliegen kann

5. Einrichtung nach Patentanspruch 4, **dadurch gekennzeichnet, dass** das Absperrorgan (20,60) einen länglichen Fortsatz (30,70) aufweist, welcher von jener Grossfläche des flächenhaften Abschnittes des Absperrorgans absteht, welche vom Ventilsitz abgewandt ist, dass in diesem Fortsatz ein Kanal (32,62) ausgeführt ist, dass die erste Mündung dieses Kanals in jener Grossfläche des flächenhaften Abschnittes des Absperrorgans liegt, welche dem Ventilsitz zugewandt ist, dass die zweite Mündung des Kanals in der freien Stirnfläche des Fortsatzes liegt und dass die Betätigungsvorrichtung (40,80) dem Fortsatz zugeordnet ist. (Fig. 2 bis 6)

6. Einrichtung nach Patentanspruch 5, **dadurch gekennzeichnet, dass** der Kanal eine zylinderförmige Wand aufweist, dass die innenliegende Mündung des Kanals im Fortsatz neben der innenliegenden Mündung der Einlassöffnung im Ventilsitz angeordnet ist und dass die Betätigungsvorrichtung der Aussenseite des Fortsatzes zugeordnet ist. (Fig. 2und 3)

7. Einrichtung nach Patentanspruch 5, **dadurch gekennzeichnet, dass** die Wand des Kanals die Form des Mantels eines Konusses aufweist, dass die den grösseren Durchmesser aufweisende Mündung des Fortsatzkanals in jener Grossfläche des flachen Abschnittes des Absperrorgans liegt, welche dem Ventilsitz zugewandt ist, dass die den kleineren Durchmesser aufweisende Mündung des Fortsatzkanals in der freien Stirnfläche des Fortsatzes liegt, dass die Betätigungsvorrichtung der Aussenseite des Fortsatzes zugeordnet ist, dass der Ventilsitz ferner eine konusförmige Erhebung aufweist, welche von jener Grossfläche des Ventilsitzes absteht, die dem Absperrorgan zugewandt ist, dass diese Erhebung neben der Einlassöffnung liegt und dass die Abmessungen der konusförmigen Erhebung derart gewählt sind, dass diese Erhebung in den Fortsatzkanal mit dem konusförmigen Verlauf dichtend passen kann. (Fig. 4 bis 6)

8. Einrichtung nach Patentanspruch 5, **dadurch gekennzeichnet, dass** die Betätigungsvorrichtung (40,80) unter anderem so ausgeführt ist, dass sie den Fortsatz des Absperrorganes sowie die sich an diesen Fortsatz anschliessenden Partien des flächenhaften Abschnittes des Absperrorganes von der Oberfläche des Ventilsitzes weg bewegen kann.

9. Einrichtung nach Patentanspruch 8, **dadurch gekennzeichnet, dass** die Betätigungsvorrichtung (40,80) einen ringförmigen Vorsprung (45) umfasst, welcher am Einrichtungssockel (5) angeformt ist und welcher den Ventilsitz (11,51) umgibt, dass die Innenseite dieses ringförmigen Vorsprungs (45) mit zumindest einem Gewinde versehen ist, dass die Betätigungsvorrichtung (40,80) ferner ein Betätigungsorgan aufweist, dass der Grundkörper (41,81) dieses Betätigungsorgans ringförmig ist, dass dieser Betätigungsring (41,81) ein Gewinde aufweist, welches mit dem Gewinde am Sockelring (45) zusammenarbeiten kann und dass der Betätigungsring (41,81) andererseits an den Fortsatz (30,70) des Absperrorganes angeschlossen ist

10. Einrichtung nach Patentanspruch 4, **dadurch gekennzeichnet, dass** die Wand der Einlassöffnung (55) im Ventilsitz die Form des Mantels eines Konusses hat, dass die den grösseren Durchmesser aufweisende Mündung dieser Einlassöffnung im Inneren des Ventils (50) angeordnet ist, dass sich ein Hilfsdichtkörper (75) in der Einlassöffnung befindet, dass die Aussenwand dieses Dichtkörpers die Form des Mantels eines Konusses hat, dass die Abmessungen dieses Konusses so gewählt sind, dass er in die Einlassöffnung dichtend passen kann, und dass dieser Hilfsdichtkörper auf dem planen Abschnitt (61) des Absperrorgans (60) aufliegt.
